(19) Europäisches Patentamt
European Patent Office
Office européen des brevets

(11) EP 4 786 548 A1

(12) # EUROPEAN PATENT APPLICATION
published in accordance with Art. 153(4) EPC

(43) Date of publication:
**05.08.2026 Bulletin 2026/32**

(21) Application number: **24897706.8**

(22) Date of filing: **29.11.2024**

(51) International Patent Classification (IPC):
***C09B 67/20*** (2006.01) ***C09B 5/62*** (2006.01)
***C09B 23/10*** (2006.01) ***C09B 47/067*** (2006.01)
***C09K 3/00*** (2006.01) ***G02B 5/22*** (2006.01)

(52) Cooperative Patent Classification (CPC):
**C09B 5/62; C09B 23/10; C09B 47/067; C09B 67/006; C09K 3/00; G02B 5/22**

(86) International application number:
**PCT/JP2024/042387**

(87) International publication number:
**WO 2025/116025 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.12.2023 JP 2023204091**

(71) Applicant: **DIC Corporation**
**Tokyo 174-8520 (JP)**

(72) Inventors:
- **TORIHATA, Yuuki**
**Kamisu-shi, Ibaraki 314-0193 (JP)**
- **MORIMITSU, Taro**
**Kamisu-shi, Ibaraki 314-0193 (JP)**

(74) Representative: **TBK**
**Bavariaring 4-6**
**80336 München (DE)**

(54) **COMPOSITION, MOLDED ARTICLE AND DEVICE**

(57) Provided is a composition containing a phthalocyanine pigment, a black pigment, and a resin, in which the phthalocyanine pigment includes one or more selected from a compound represented by General Formula (Pc) and a dimer of the compound, and the black pigment includes one or more selected from compounds represented by Formulae (1) to (6).

FIG. 1

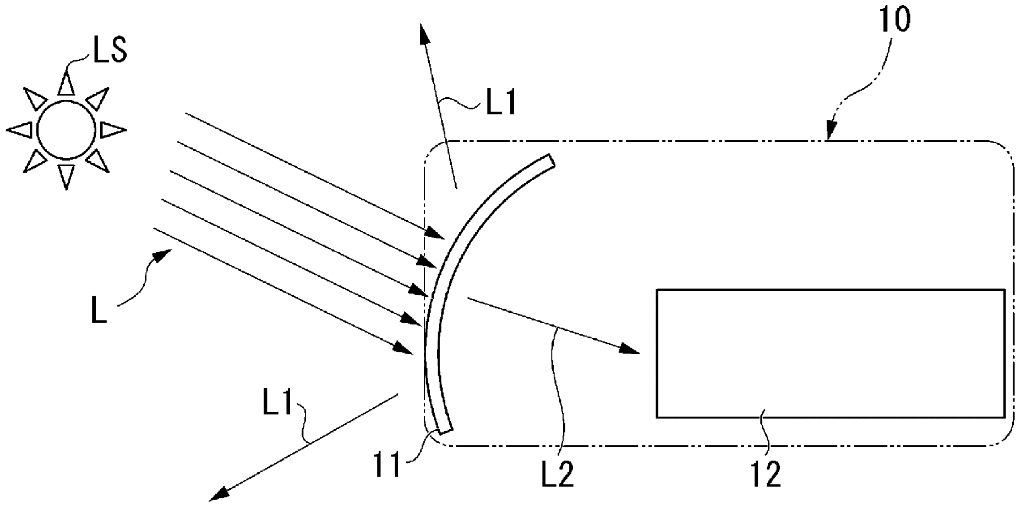


EP 4 786 548 A1

## Description

### Technical Field

The present invention relates to a composition, a molded article, and a device.

Priority is claimed on Japanese Patent Application No. 2023-204091, filed on December 1, 2023, the content of which is incorporated herein by reference.

### Background Art

In the related art, infrared cameras and infrared sensors have been used for visualizing infrared radiation emitted from an object in accordance with a change in temperature of the object as changes in the amount of infrared radiation, and have operational stability in the dark as compared with cases where detection is performed using visible light or the like. The infrared cameras and infrared sensors are widely used for diagnosis in the medical field, nondestructive inspection for detecting deterioration of buildings, electrical equipment, and the like, night-vision cameras in the security field, and personal authentication, such as biometric authentication using cameras at ATMs of financial institutions and at airports.

In addition, Light Detection and Ranging (LiDAR) is a remote sensing method that irradiates an object with near-infrared light, visible light, or ultraviolet light and detects reflected light with an optical sensor to measure a distance, and in vehicles, near-infrared (NIR) sensors and the like are used. The LiDAR is currently used as a supplementary technology in adaptive cruise control and the like mounted on vehicles and the like, but is expected to be in significant demand in advanced driver-assistance systems (ADAS) or future autonomous driving (AD), and advanced LiDAR is required for promoting ADAS/AD.

As materials for optical members such as the cameras and sensors described above, optical glass or optical resin is used. Among these, examples of materials that block visible light and have infrared transmittance include a thermoplastic resin composition containing a high-refractive-index material and an optical lens formed from the resin composition. For example, PTL 1 proposes a thermoplastic resin composition containing a thermoplastic resin and a colorant, in which the thermoplastic resin composition has a refractive index of 1.60 or more at a wavelength of 894 nm, and, when the thermoplastic resin composition has a thickness of 1 mm, the maximum value of transmittance at wavelengths of 380 nm to 630 nm is more than 0% and 1.00% or less, and an average transmittance at wavelengths of 840 nm to 940 nm is 80% or more.

### Citation List

### Patent Literature

PTL 1: WO2020/138050

### Summary of Invention

### Technical Problem

In recent years, a composition having high blackness while blocking visible light and transmitting infrared light has been required. Although perylene and the like are used as a black pigment in the composition, when a molded article is produced by injection molding using the composition, there is a problem in that the molded article becomes reddish due to the influence of heat or the like during molding. Although it has been found that the blackness can be improved to some extent by adding a blue pigment to the composition containing a black pigment, many blue pigments absorb infrared light, so that it is difficult to achieve both improvement in blackness and transmission of infrared light, with the result that improvement in sensing accuracy is limited.

In the related art, although it is disclosed that noise derived from visible light is reduced by setting the maximum value of transmittance of visible light and the average transmittance of infrared light within the ranges, there is no mention of improving blackness, and there remains room for improvement.

An object of the present invention is to provide a composition, a molded article, and a device, which can achieve both excellent blocking of visible light and excellent transmission of infrared light, can additionally achieve favorable heat resistance, and can improve sensing accuracy and achieve excellent sensing stability.

### Solution to Problem

As a result of intensive studies, the present inventors have found that, based on the finding that a predetermined

phthalocyanine pigment has a high infrared transmittance, when the predetermined phthalocyanine pigment, which is a blue pigment, is added to a composition containing a predetermined black pigment and a resin, visible light is favorably blocked due to improvement in blackness, infrared light is favorably transmitted due to the characteristic of the predetermined phthalocyanine pigment, and favorable heat resistance can additionally be achieved, with the result that sensing accuracy is improved and excellent sensing stability can be achieved.

That is, the present invention provides the following configurations.

[1] A composition containing:

a phthalocyanine pigment;
a black pigment; and
a resin,
in which the phthalocyanine pigment includes one or more selected from a compound represented by General Formula (Pc) and a dimer of the compound,

[Chem. 1]

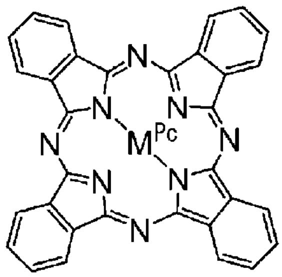

(Pc)

(in the formula,
$M^{Pc}$ represents $X^{Pc}$-Al (trivalent aluminum), $X^{Pc}$-Co (trivalent cobalt), Sn (divalent tin), Fe (divalent iron), or Cu (divalent copper),
$X^{Pc}$ represents a hydroxyl group, a fluorine atom, a chlorine atom, a bromine atom, an iodine atom, $-O-P(=O)R^1R^2$, $-O-C(=O)R^3$, or $-OSO_2R^4$,
$R^1$ and $R^2$ each independently represent a hydrogen atom, a hydroxyl group, an alkyl group which may have a substituent, an aryl group which may have a substituent, an alkoxy group which may have a substituent, or an aryloxy group which may have a substituent,
$R^1$ and $R^2$ may be bonded to each other to form a ring,
$R^3$ represents a hydrogen atom, an alkyl group which may have a substituent, a cycloalkyl group which may have a substituent, an aryl group which may have a substituent, or a heterocyclic group which may have a substituent, and
$R^4$ represents a hydroxyl group, an alkyl group which may have a substituent, an aryl group which may have a substituent, or a heterocyclic group which may have a substituent), and
the black pigment includes one or more compounds selected from compounds represented by Formulae (1) to (6),

[Chem. 2]

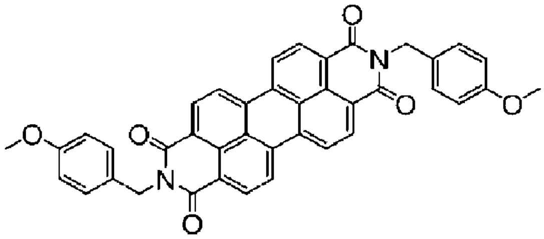

(1)

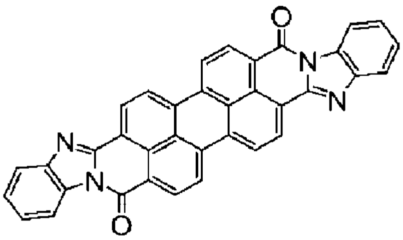

(2)

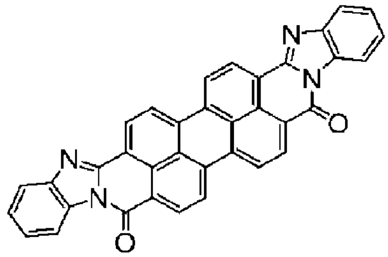

(3)

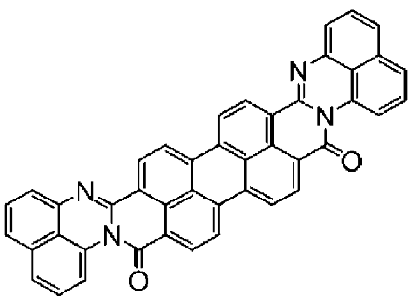

(4)

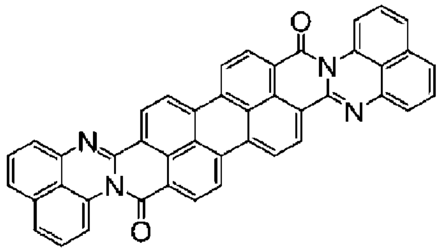

(5)

[Chem. 3]

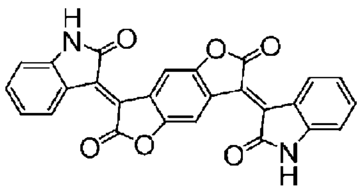

(6)

[2] The composition according to [1], in which an average particle diameter of the phthalocyanine pigment is 1 nm or more and 500 nm or less.

[3] The composition according to [1], in which a ratio of the number of moles of the phthalocyanine pigment to the number of moles of a total amount of the compounds represented by Formulae (1) to (6), which are contained in the black pigment, is 5/95 to 99/1.

[4] The composition according to [1], in which the resin is one or more selected from the group consisting of a polyethylene terephthalate (PET) resin, a polycarbonate (PC) resin, an acrylonitrile styrene (AS) resin, a polymethyl methacrylate (PMMA) resin, an acrylonitrile/butadiene/styrene (ABS) copolymer resin, a polyamide (PA) resin, and an aminoalkyd resin.

[5] The composition according to any one of [1] to [4], in which the composition is a composition for a molded article or a coating composition.

[6] A molded article formed by molding the composition for a molded article according to [5].

[7] The molded article according to [6], in which a blackness ($L^*$) of the molded article is less than 34.

[8] The molded article according to [6], in which an infrared transmittance of the molded article at a wavelength of 900 nm is 60% or more.
[9] A device including the molded article according to [6].

Advantageous Effects of Invention

According to the present invention, it is possible to provide a composition, a molded article, and a device, which can achieve both excellent blocking of visible light and excellent transmission of infrared light, can additionally achieve favorable heat resistance, and can improve sensing accuracy and achieve excellent sensing stability.

Brief Description of Drawings

[FIG. 1] FIG. 1 is a schematic view showing an example of a device including a molded article formed by molding the composition for a molded article according to the present invention.

Description of Embodiments

Hereinafter, embodiments of the present invention will be described. The present invention is not limited to the following embodiments.

<Composition>

The composition according to the present embodiment is a composition containing a phthalocyanine pigment, a black pigment, and a resin.

(Phthalocyanine pigment)

The phthalocyanine pigment includes one or more selected from a compound represented by General Formula (Pc) and a dimer of the compound.

[Chem. 4]

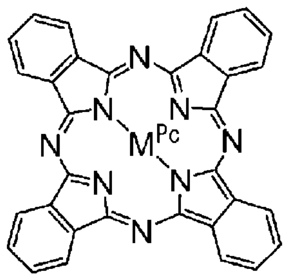

(Pc)

(in the formula,
$M^{Pc}$ represents $X^{Pc}$-Al (trivalent aluminum), $X^{Pc}$-Co (trivalent cobalt), Sn (divalent tin), Fe (divalent iron), or Cu (divalent copper),
$X^{Pc}$ represents a hydroxyl group, a fluorine atom, a chlorine atom, a bromine atom, an iodine atom, $-O-P(=O)R^1R^2$, $-O-C(=O)R^3$, or $-OSO_2R^4$,
$R^1$ and $R^2$ each independently represent a hydrogen atom, a hydroxyl group, an alkyl group which may have a substituent, an aryl group which may have a substituent, an alkoxy group which may have a substituent, or an aryloxy group which may have a substituent,
$R^1$ and $R^2$ may be bonded to each other to form a ring,
$R^3$ represents a hydrogen atom, an alkyl group which may have a substituent, a cycloalkyl group which may have a substituent, an aryl group which may have a substituent, or a heterocyclic group which may have a substituent, and
$R^4$ represents a hydroxyl group, an alkyl group which may have a substituent, an aryl group which may have a substituent, or a heterocyclic group which may have a substituent)

Examples of the alkyl group which may have a substituent include linear or branched alkyl groups such as a

methyl group, an ethyl group, a propyl group, an isopropyl group, a butyl group, an isobutyl group, a tert-butyl group, a neopentyl group, an n-hexyl group, an n-octyl group, a stearyl group, and a 2-ethylhexyl group; and alkyl groups having a substituent, such as a trichloromethyl group, a trifluoromethyl group, a 2,2,2-trifluoroethyl group, a 2,2-dibromoethyl group, a 2,2,3,3-tetrafluoropropyl group, a 2-ethoxyethyl group, a 2-butoxyethyl group, a 2-nitropropyl group, a benzyl group, a 4-methylbenzyl group, a 4-tert-butylbenzyl group, a 4-methoxybenzyl group, a 4-nitrobenzyl group, and a 2,4-dichlorobenzyl group.

Among these, a linear or branched alkyl group is preferable, and a linear or branched alkyl group having 1 to 8 carbon atoms is more preferable.

Examples of "aryl group" in the "aryl group which may have a substituent" include aryl groups such as a phenyl group, a p-tolyl group, a naphthyl group, a 6-methyl-2-naphthyl group, and an anthryl group; and aryl groups having a substituent, such as a p-bromophenyl group, a p-nitrophenyl group, a p-methoxyphenyl group, a 2,4-dichlorophenyl group, a pentafluorophenyl group, a 2-aminophenyl group, a 2-methyl-4-chlorophenyl group, a 4-hydroxy-1-naphthyl group, a 4,5,8-trichloro-2-naphthyl group, an anthraquinonyl group, and a 2-aminoanthraquinonyl group.

Among these, an aryl group or an aryl group substituted with one chlorine atom, bromine atom, or nitro group is preferable, an aryl group is more preferable, a tolyl group or a phenyl group is further preferable, and a phenyl group is particularly preferable.

Examples of the alkoxy group which may have a substituent include linear or branched alkoxy groups such as a methoxy group, an ethoxy group, a propoxy group, an isopropoxy group, an n-butoxy group, an isobutoxy group, a tert-butoxy group, a neopentyloxy group, a 2,3-dimethyl-3-pentyloxy group, an n-hexyloxy group, an n-octyloxy group, a stearyloxy group, and a 2-ethylhexyloxy group; and alkoxy groups having a substituent, such as a trichloromethoxy group, a trifluoromethoxy group, a 2,2,2-trifluoroethoxy group, a 2,2,3,3-tetrafluoropropoxy group, a 2,2-di(trifluoromethyl) propoxy group, a 2-ethoxyethoxy group, a 2-butoxyethoxy group, a 2-nitropropoxy group, and a benzyloxy group.

Among these, a linear or branched alkoxy group is preferable, and a linear or branched alkoxy group having 1 to 8 carbon atoms is more preferable.

Examples of the aryloxy group which may have a substituent include aryloxy groups such as a phenoxy group, a p-methylphenoxy group, a naphthyloxy group, and an anthryloxy group; and aryloxy groups having a substituent, such as a p-nitrophenoxy group, a p-methoxyphenoxy group, a 2,4-dichlorophenoxy group, a pentafluorophenoxy group, and a 2-methyl-4-chlorophenoxy group.

Among these, an aryloxy group or an aryloxy group substituted with one chlorine atom, bromine atom, or nitro group is preferable, an aryloxy group is more preferable, a p-methylphenoxy group or a phenoxy group is further preferable, and a phenoxy group is particularly preferable.

Examples of the cycloalkyl group which may have a substituent include cycloalkyl groups such as a cyclopentyl group, a cyclohexyl group, and an adamantyl group; and cycloalkyl groups having a substituent, such as a 2,5-dimethylcyclopentyl group and a 4-tert-butylcyclohexyl group.

Examples of "heterocyclic group" in the "heterocyclic group which may have a substituent" include heterocyclic groups such as a pyridyl group, an N-oxopyridyl group, a pyrazyl group, a piperidino group, a pyranyl group, a morpholino group, and an acridinyl group; and heterocyclic groups having a substituent, such as a 3-methylpyridyl group, an N-methylpiperidyl group, and an N-methylpyrrolyl group.

Among these, a pyridyl group or an N-oxopyridyl group is preferable.

The phthalocyanine pigment is not particularly limited as long as it is the compound represented by General Formula (Pc) or a dimer of the compound. For example, when $M^{Pc}$ in the formula is $X^{Pc}$-Al (trivalent aluminum), $X^{Pc}$-Co (trivalent cobalt), Cu (divalent copper), Sn (divalent tin), or Fe (divalent iron), the phthalocyanine pigment is represented by the following structural formulae (Al-Cl/Pc), (Al-F/Pc), (Al-Br/Pc), (Al-I/Pc), (Co-Cl/Pc), (Co-F/Pc), (Co-Br/Pc), (Co-I/Pc), (Cu/Pc), (Sn/Pc), (Fe/Pc), (Al-OH/Pc), (Pc/Al-O-Al/Pc), (Co-OH/Pc), and (Pc/Co-O-Co/Pc), respectively. The phthalocyanine pigment according to the present embodiment is typically contained in the composition as a blue pigment.

[Chem. 5]

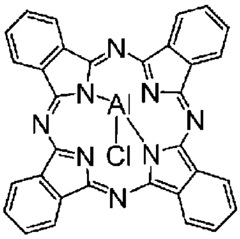

(Al-Cl/Pc)

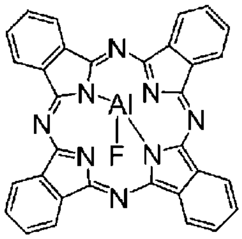

(Al-F/Pc)

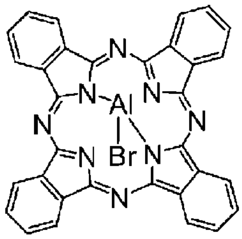

(Al-Br/Pc)

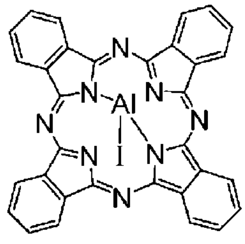

(Al-I/Pc)

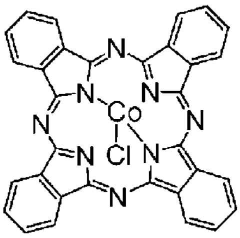

(Co-Cl/Pc)

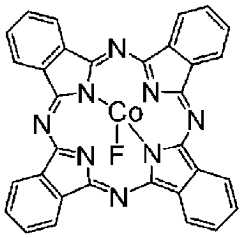

(Co-F/Pc)

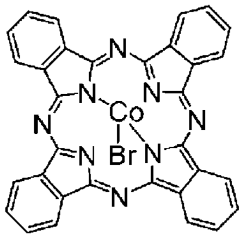

(Co-Br/Pc)

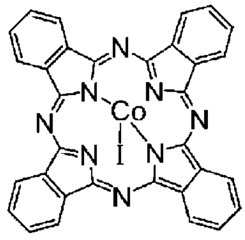

(Co-I/Pc)

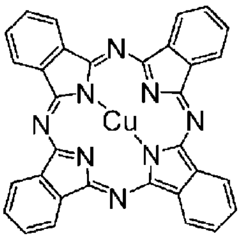

(Cu/Pc)

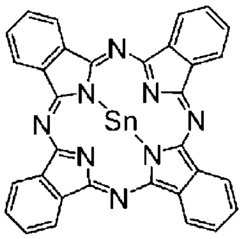

(Sn/Pc)

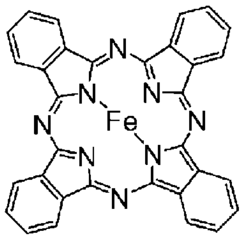

(Fe/Pc)

[Chem. 6]

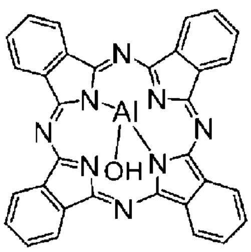

(Al-OH/Pc)

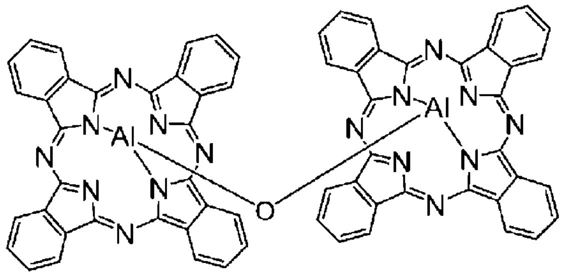

(Pc/Al-O-Al/Pc)

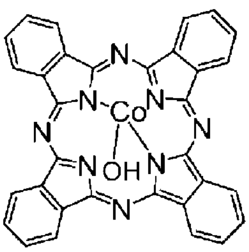

(Co-OH/Pc)

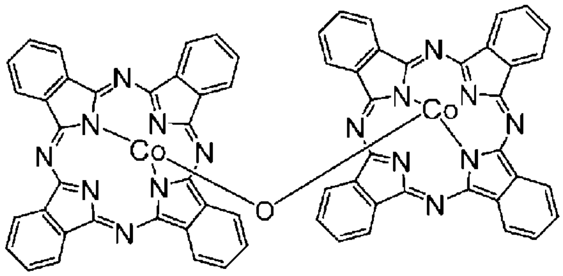

(Pc/Co-O-Co/Pc)

An average particle diameter of the phthalocyanine pigment is not particularly limited, but may be 1 nm or more, 3 nm or more, 5 nm or more, or 15 nm or more. In addition, the average particle diameter of the phthalocyanine pigment may be 500 nm or less, 100 nm or less, 75 nm or less, or 45 nm or less. When the average particle diameter of the phthalocyanine pigment is 1 nm or more and 500 nm or less, dispersibility of the phthalocyanine pigment can be enhanced, and the blackness can be further improved with a small added amount. In the present embodiment, the average particle diameter means a crystallite diameter calculated from the full width at half maximum measured by powder X-ray diffraction.

A content of the phthalocyanine pigment is not particularly limited, but is preferably 5% to 95% by mass, more preferably 10% to 90% by mass, and still more preferably 15% to 85% by mass with respect to 100% by mass of the total amount of pigments contained in the composition.

(Black pigment)

Examples of the black pigment include perylene-based black pigments and lactone-based black pigments. Examples of the perylene-based black pigments include compounds represented by Formulae (1) to (5). Examples of the lactone-based black pigments include a compound represented by Formula (6). In the present embodiment, the black pigment includes one or more selected from the compounds represented by Formulae (1) to (6).

[Chem. 7]

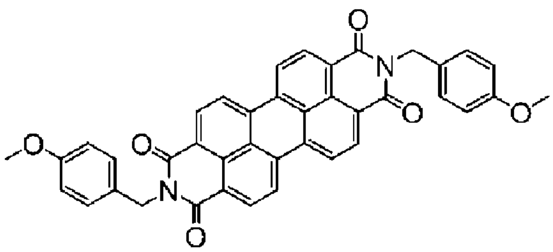

(1)

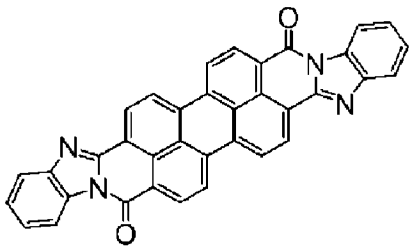

(2)

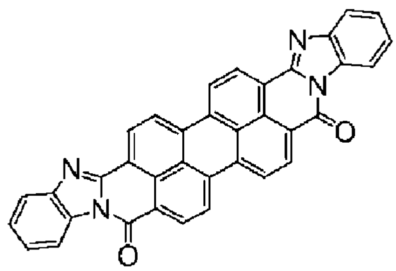

(3)

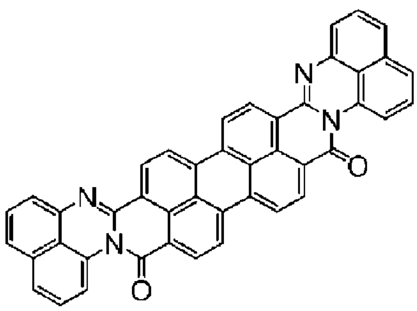

(4)

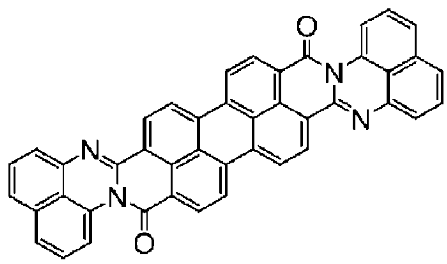

(5)

[Chem. 8]

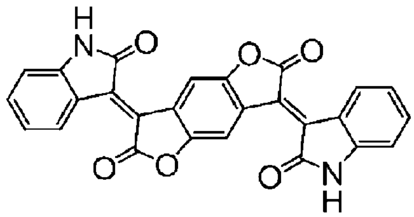

(6)

The black pigment may include two specific types, such as isomers, among the compounds represented by Formulae (1) to (6), or may consist of the two specific compounds. In this case, for example, when the black pigment includes the compound represented by Formula (2) and the compound represented by Formula (3), a molar ratio of the compound represented by Formula (2) to the compound represented by Formula (3) is preferably 99/1 to 1/99, and more preferably 40/60 to 60/40.

In addition, when the black pigment includes the compound represented by Formula (4) and the compound represented by Formula (5), a molar ratio of the compound represented by Formula (4) to the compound represented by Formula (5) is preferably 99/1 to 1/99, and more preferably 40/60 to 60/40.

In the composition according to the present embodiment, a ratio of the number of moles of the phthalocyanine pigment to the number of moles of the total amount of the compounds represented by Formulae (1) to (6), which are contained in the black pigment, is not particularly limited, but is preferably 5/95 to 99/1, more preferably 5/95 to 95/5, still more preferably 45/55 to 95/5, and particularly preferably 70/30 to 90/10. When the ratio is 5/95 to 99/1, the blackness is further improved, and the material efficiency can be improved since the mixing ratio of the phthalocyanine pigment to the black pigment is in an appropriate range.

(Resin)

The resin is not particularly limited, but is preferably one or more selected from the group consisting of a polyethylene terephthalate (PET) resin, a polycarbonate (PC) resin, an acrylonitrile styrene (AS) resin, a polymethyl methacrylate (PMMA) resin, an acrylonitrile/butadiene/styrene (ABS) copolymer resin, a polyamide (PA) resin, and an aminoalkyd resin. When the composition is used for a molded article, from the viewpoint of heat resistance and impact resistance, either or both of a polyethylene terephthalate (PET) resin and a polycarbonate (PC) resin are more preferable.

A melting point of the resin is preferably 150°C to 350°C, and preferably 200°C to 300°C.

The melting point of the resin in the present embodiment is determined by placing approximately 5 mg of the resin in an aluminum (Al) pan, placing the pan on the sample stage of a thermogravimetric/differential thermal analyzer (TG-DTA, manufactured by Hitachi High-Tech Science Corporation), measuring while increasing the temperature stepwise from 30°C to 400°C, and defining, as the melting point, the temperature at which the sample has completely melted after the temperature at which the sample starts to melt.

Application of the composition according to the present embodiment is not particularly limited, and examples thereof include a composition for a molded article and a coating composition.

A content of the resin in the composition can be appropriately determined in accordance with the application of the composition.

For example, in the composition for a molded article, the content thereof is preferably 5,000 to 50,000 parts by mass, and more preferably 5,000 to 15,000 parts by mass with respect to 10 parts by mass of the total amount of the phthalocyanine pigment and the black pigment.

For example, in the coating composition, the content thereof is preferably 50 to 500 parts by mass, and more preferably 50 to 100 parts by mass with respect to 10 parts by mass of the total amount of the phthalocyanine pigment and the black pigment.

The "total amount of the phthalocyanine pigment and the black pigment" refers to the mass of the pigment itself even when the purity of the pigment is 90%, for example, and is not the mass in consideration of the purity.

(Dispersing aid)

When dispersing the phthalocyanine pigment and the black pigment in the composition, a dispersing aid such as a coloring agent derivative and a surfactant can be appropriately used. By using the dispersing aid, the blackness of the

molded article can be further increased.

The coloring agent derivative is not particularly limited, and examples thereof include compounds obtained by introducing, into an organic pigment, anthraquinone, acridone, or triazine, a basic substituent, an acidic substituent, or a phthalimidomethyl group which may have a substituent.

Examples of the surfactant include, but are not particularly limited to, anionic surfactants such as sodium lauryl sulfate, polyoxyethylene alkyl ether sulfates, sodium dodecylbenzenesulfonate, alkali salts of styrene-acrylic acid copolymers, sodium stearate, sodium alkylnaphthalenesulfonate, sodium alkyldiphenyl ether disulfonate, monoethanolamine lauryl sulfate, triethanolamine lauryl sulfate, ammonium lauryl sulfate, monoethanolamine stearate, monoethanolamine salts of styrene-acrylic acid copolymers, and polyoxyethylene alkyl ether phosphate esters; nonionic surfactants such as polyoxyethylene oleyl ether, polyoxyethylene lauryl ether, polyoxyethylene nonylphenyl ether, polyoxyethylene alkyl ether phosphate esters, polyoxyethylene sorbitan monostearate, and polyethylene glycol monolaurate; cationic surfactants such as alkyl quaternary ammonium salts and ethylene oxide adducts thereof; and amphoteric surfactants such as alkyl betaines, including alkyldimethylaminoacetate betaine, and alkylimidazolines. These may be used alone or in combination of two or more thereof.

(Other components)

The composition according to the present embodiment may contain an antioxidant and a mold release agent as an additive.

Examples of the antioxidant include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxyhydrocinnamide), 3,5-di-tert-butyl-4-hydroxybenzylphosphonate diethyl ester, tris(3,5-di-tert-butyl-4-hydroxybenzyl) isocyanurate, and 3,9-bis{1,1-dimethyl-2-[β-(3-tert-butyl-4-hydroxy-5-methylphenyl)propionyloxy]ethyl}-2,4,8,10-tetraoxaspiro[5,5]undecane.

The mold release agent is preferably one in which 90% by mass or more thereof is composed of an ester of an alcohol and a fatty acid. Specific examples of the ester of an alcohol and a fatty acid include esters of a monohydric alcohol and a fatty acid, and partial esters or complete esters of a polyhydric alcohol and a fatty acid. As the ester of a monohydric alcohol and a fatty acid, an ester of a monohydric alcohol having 1 to 20 carbon atoms and a saturated fatty acid having 10 to 30 carbon atoms is preferable. In addition, as the partial ester or complete ester of a polyhydric alcohol and a fatty acid, a partial ester or a complete ester of a polyhydric alcohol having 1 to 25 carbon atoms and a saturated fatty acid having 10 to 30 carbon atoms is preferable.

Specific examples of the ester of a monohydric alcohol and a saturated fatty acid include stearyl stearate, palmityl palmitate, butyl stearate, methyl laurate, and isopropyl palmitate. Examples of the partial ester or complete ester of a polyhydric alcohol and a saturated fatty acid include stearic acid monoglyceride, stearic acid diglyceride, stearic acid triglyceride, stearic acid monosorbitate, behenic acid monoglyceride, capric acid monoglyceride, lauric acid monoglyceride, pentaerythritol monostearate, pentaerythritol tetrastearate, pentaerythritol tetrapelargonate, propylene glycol monostearate, biphenyl biphenate, sorbitan monostearate, 2-ethylhexyl stearate, and complete esters or partial esters of dipentaerythritol, such as dipentaerythritol hexastearate.

Furthermore, the composition according to the present embodiment may further contain, as other additives, processing stabilizers, ultraviolet absorbers, fluidity modifiers, crystal nucleating agents, reinforcing agents, dyes, antistatic agents, bluing agents, antibacterial agents, or the like.

<Method for producing composition>

In a method for producing the composition according to the present embodiment, the composition is obtained by mixing the phthalocyanine pigment including one or more selected from the compound represented by General Formula (Pc) and a dimer of the compound, the black pigment including one or more selected from the compounds represented by Formulae (1) to (6), and the resin.

The method for producing the composition is not limited to the above, and may include, for example, a step of obtaining a pigment mixture by mixing the phthalocyanine pigment including one or more selected from the compound represented by General Formula (Pc) and a dimer of the compound with the black pigment including one or more selected from the compounds represented by Formulae (1) to (6), and a step of obtaining the composition by mixing the pigment mixture and the resin. In addition, other steps may be included before the step of obtaining the pigment mixture, between the step of obtaining the pigment mixture and the step of obtaining the composition, and/or after the step of obtaining the composition, without departing from the spirit of the present invention.

<Molded article>

The molded article according to the present embodiment is formed by molding the composition for a molded article. A molding method is not particularly limited, and an injection molding method, an extrusion molding method, a blow molding method, a compression molding method, a vacuum molding method, and the like can be used. For example, when producing a three-dimensional product, the injection molding method can be used, and when producing a plate-like product, a flat press or the like can be used in addition to the extrusion molding method. When producing a film-shaped product, a solution casting method can be used in addition to melt extrusion, and examples of the melt molding method include inflation film molding, cast molding, extrusion lamination molding, calender molding, sheet molding, fiber molding, blow molding, injection molding, rotational molding, and coating molding. Further, in the case of a resin cured by an active energy ray, a cured product can be produced by using various curing methods using active energy rays. In particular, when a thermosetting resin is used as a main component of a matrix resin, examples of the molding method include a molding method in which the molding material is formed into a prepreg and pressurized and heated using a press or an autoclave. Other examples thereof include Resin Transfer Molding (RTM), Vacuum assist Resin Transfer Molding (VaRTM), lamination molding, and hand lay-up molding.

<Blackness>

A blackness ($L^*$) of the molded article according to the present embodiment is not particularly limited, but is preferably less than 34, more preferably less than 32, and still more preferably less than 30. More specifically, the blackness ($L^*$) is preferably 25 to 33, and preferably 25 to 30. The blackness ($L^*$) is determined using the CIE-$L^*a^*b^*$ color system. When the blackness ($L^*$) of the molded article is less than 34, visible light can be more favorably blocked.

<Infrared transmittance>

An infrared transmittance of the molded article according to the present embodiment at a wavelength of 900 nm is not particularly limited, but is preferably 60% or more, more preferably 70% or more, and still more preferably 80% or more. More specifically, the infrared transmittance is preferably 60% to 90%, and preferably 80% to 90%. When the infrared transmittance of the molded article at a wavelength of 900 nm is 60% or more, infrared light is more favorably transmitted, and thus the sensing accuracy can be further improved.

<Heat resistance>

In the molded article according to the present embodiment, a color difference $\Delta E^*ab$ value calculated from the following expression (A) using $L^*$, $a^*$, and $b^*$ in the CIE-$L^*a^*b^*$ color system is preferably less than 3, more preferably 0.05 to 2.5, and still more preferably 0.075 to 1.5. When the color difference $\Delta E^*ab$ value is less than 3, a color change caused by light irradiation in a wavelength range from ultraviolet light to infrared light is small, stability against heat is high, and favorable heat resistance can be achieved.

$$\Delta E^*ab = [(\Delta L^*)^2 + (\Delta a^*)^2 + (\Delta b^*)^2]^{1/2} \quad \ldots \text{(A)}$$

[in Expression (A), $\Delta L^* = L_1^* - L_0^*$, $\Delta a^* = a_1^* - a_0^*$, and $\Delta b^* = b_1^* - b_0^*$, $L_0^*$, $a_0^*$, and $b_0^*$ represent color coordinates of the molded article before irradiation with a xenon lamp, and $L_1^*$, $a_1^*$, and $b_1^*$ represent color coordinates of the molded article after irradiation with a xenon lamp]

<Device>

The device according to the present embodiment is not particularly limited as long as it includes the molded article, but is typically a sensor. Applications of the sensor are also not particularly limited, and examples thereof include remote sensing systems such as LiDAR. Examples of the sensor of a remote sensing system include a near-infrared (NIR) sensor used for ADAS/AD of a vehicle.

FIG. 1 is a schematic view showing an example of the device including the molded article formed by molding the composition for a molded article according to the present invention. In the device, LiDAR is typically adopted.

In FIG. 1, a device 10 includes a reflector 11 formed of a molded article obtained by molding the composition for a molded article, and an optical sensor 12.

The reflector 11 transmits a light beam of a specific wavelength among light beams L emitted from a light source LS. For example, the reflector 11 blocks visible light L1 and transmits infrared light L2 among the light beams L emitted from the light source LS. Accordingly, improvement in sensing accuracy and excellent sensing stability in the optical sensor 12

can be realized, and reliability of the device 10 can be improved.

EXAMPLES

Hereinafter, Examples of the present invention will be described. The present invention is not limited to Examples.

(Examples 1 to 14)

[Production of composition for molded article]

A phthalocyanine pigment and a black pigment were mixed so as to have a molar ratio shown in Table 1 to prepare a pigment mixture. Next, 10,000 parts by mass of a resin was added to 10 parts by mass of the pigment mixture and mixed to obtain a composition for a molded article. The phthalocyanine pigment, the black pigment, and the resin used in each of Examples are shown below. The purity of the phthalocyanine pigment and the resin was approximately 100%.

(Phthalocyanine pigment)

· Copper phthalocyanine pigment (Cu/Pc)

average particle diameter: 22 nm, $M^{Pc}$: Cu, molecular weight: 576.08;
product name: FASTGEN BLUE PA5380;
manufacturer: DIC Corporation

[Chem. 9]

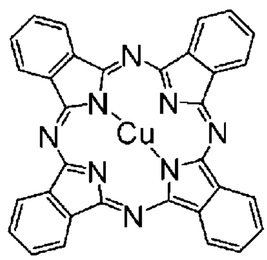

Molecular Weight: 576.08

· Tin phthalocyanine pigment (Sn/Pc)

average particle diameter: 30 nm, $M^{Pc}$: Sn, molecular weight: 631.25;
product name: Tin (II) Phthalocyanine;
manufacturer: Tokyo Chemical Industry Co., Ltd.

[Chem. 10]

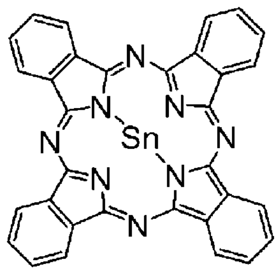

Molecular Weight: 631.25

· Aluminum phthalocyanine pigment (Al-Cl/Pc)

average particle diameter: 13 nm, $M^{Pc}$: Al, $X^{Pc}$: Cl, molecular weight: 574.97;
product name: PB79;
manufacturer: Joint Venture Meilida Pigment Industry Co., Ltd.

[Chem. 11]

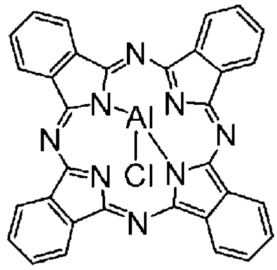

Molecular Weight: 574.97

(Black pigment)

· Black pigment 1 (perylene black)
The black pigment 1 includes a compound represented by Formula (1) (molecular weight: 630.66).

[Chem. 12]

Molecular Weight: 630.66

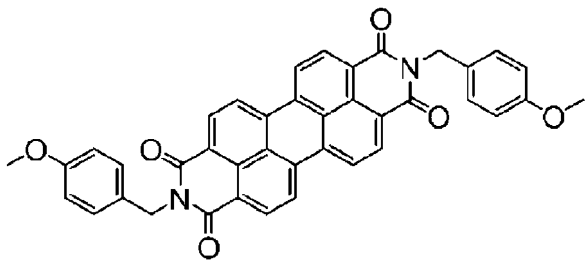

(1)

· Black pigment 2 (perylene black)
The black pigment 2 includes a compound represented by Formula (2) (molecular weight: 536.55) and a compound represented by Formula (3) (molecular weight: 536.55) at a molar ratio of 50:50.

[Chem. 13]

Molecular Weight: 536.55

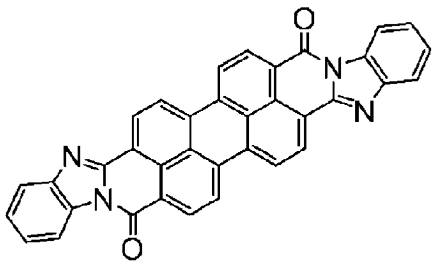

(2)

Molecular Weight: 536.55

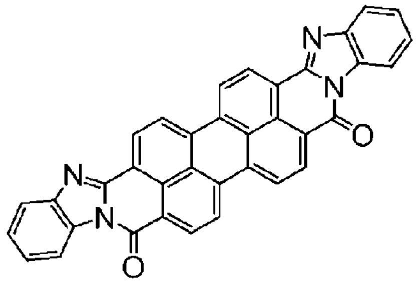

(3)

· Black pigment 3 (perylene black)

The black pigment 3 includes a compound represented by Formula (4) (molecular weight: 636.67) and a compound represented by Formula (5) (molecular weight: 636.67) at a molar ratio of 50:50.

[Chem. 14]

Molecular Weight: 636.67

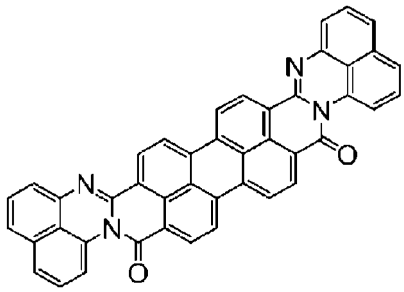

(4)

Molecular Weight: 636.67

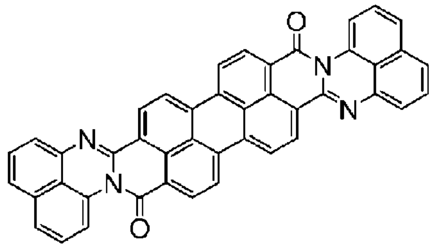

(5)

· Black pigment 4 (lactone black)

The black pigment 4 includes a compound represented by Formula (6) (molecular weight: 448.39).

[Chem. 15]

Molecular Weight: 448.39

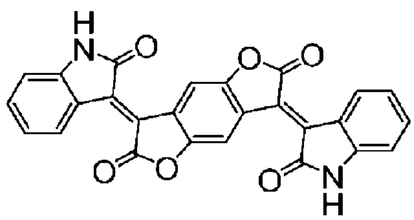

(6)

(Resin)

· Polycarbonate (PC) resin

product name: PANLITE L-1225Z;
manufacturer: Teijin Limited;
melting point: 221°C to 242°C;
in the structural formula, n represents an integer which is not 0.

[Chem. 16]

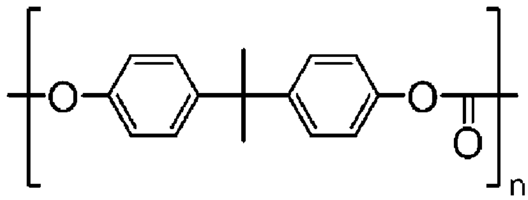

· Polyethylene terephthalate (PET) resin

product name: Mitsui PET J125;
manufacturer: Mitsui Chemicals, Inc.
melting point: 251°C to 262°C;
in the structural formula, n represents an integer which is not 0.

[Chem. 17]

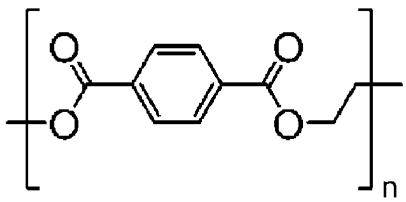

[Production of molded article]

The composition for a molded article obtained in each of Examples was put into an injection molding machine (manufactured by Nissei Plastic Industrial Co., Ltd., device name "PNX60III-5A"), and injection molding was carried out under the following two conditions to obtain a rectangular parallelepiped molded article 1 and molded article 2.
· Molded article 1

molding temperature: 280°C;
residence time: 0 minutes;
dimensions: length of 5 cm, width of 4 cm, and height of 2 mm

· Molded article 2

molding temperature: 280°C;
residence time: 10 minutes;
dimensions: length of 5 cm, width of 4 cm, and height of 2 mm

(Comparative Example 1)

A composition for a molded article and a molded article were obtained in the same manner as in Example 1, except that the black pigment was not used and the phthalocyanine pigment and the resin were prepared at contents

shown in Table 1.

(Comparative Example 2)

A composition for a molded article and a molded article were obtained in the same manner as in Example 1, except that the phthalocyanine pigment was not used and the black pigment and the resin were prepared at contents shown in Table 1.

The molded articles obtained in Examples and Comparative Examples were measured and evaluated by the following methods.

[Blackness]

A blackness ($L^*$) of the molded article 1 was measured using a spectrophotometer (manufactured by Sun Color, device name "Datacolor 650"). When the $L^*$ value was less than 34, favorable blackness was exhibited; and it could be determined that, as the $L^*$ value was lower, the degree of blackness was higher.

[Infrared transmittance]

The infrared transmittance of the molded article 1 was measured using a spectrophotometer (manufactured by JASCO Corporation, device name "V-770"). An integrating sphere (manufactured by JASCO Corporation, device name "ISN-923") was used as an attached device, and the measurement was carried out in a range of 300 nm to 2,500 nm in 2 nm increments. When the infrared transmittance was 60% or more, favorable infrared transmittance was exhibited; and it could be determined that, as the value of the infrared transmittance was higher, the infrared transmittance was higher.

[Heat resistance]

Colorimetric values of the molded article 1 and the molded article 2 were obtained using a spectrophotometer (manufactured by Sun Color, device name "Datacolor 650"). Next, $\Delta E^*ab$ (= colorimetric value of molded article 2 - colorimetric value of molded article 1) was obtained using the above expression (A). When the $\Delta E^*ab$ value was less than 3, favorable heat resistance was exhibited; and it could be determined that, as the $\Delta E^*ab$ value was smaller, the color change was smaller and the heat resistance was higher. The results are shown in Table 1.

[Table 1]

| | Composition for molded article | | | | | | | Molded article | | |
|---|---|---|---|---|---|---|---|---|---|---|
| | Phthalocyanine pigment (1) | | Black pigment (2) | | Resin | | Molar ratio ((1)/(2)) | | | |
| | Type | Content (part by mass) | Type | Content (part by mass) | Type | Content (part by mass) | | Blackness (L*, -) | **Infrared** transmittance (900 nm, %) | Heat resistance (ΔE*ab, -) |
| Example 1 | Cu/Pc | 8 | Black pigment 1 | 2 | PC | 10000 | 87/13 | 32 | 61 | 0.9 |
| Example 2 | Sn/Pc | 8 | Black pigment 1 | 2 | PC | 10000 | 84/16 | 30 | 84 | 0.5 |
| Example 3 | Al-Cl/Pc | 2 | Black pigment 1 | 8 | PC | 10000 | 27/73 | 32 | 88 | 0.2 |
| Example 4 | Al-Cl/Pc | 3 | Black pigment 1 | 7 | PC | 10000 | 39/61 | 32 | 88 | 0.2 |
| Example 5 | Al-Cl/Pc | 4 | Black pigment 1 | 6 | PC | 10000 | 50/50 | 32 | 88 | 0.1 |
| Example 6 | Al-Cl/Pc | 5 | Black pigment 1 | 5 | PC | 10000 | 60/40 | 31 | 87 | 0.1 |
| Example 7 | Al-Cl/Pc | 6 | Black pigment 1 | 4 | PC | 10000 | 69/31 | 31 | 87 | 0.3 |
| Example 8 | Al-Cl/Pc | 7 | Black pigment 1 | 3 | PC | 10000 | 78/22 | 30 | 87 | 0.4 |
| Example 9 | Al-Cl/Pc | 8 | Black pigment 1 | 2 | PC | 10000 | 86/14 | 30 | 87 | 0.2 |
| Example 10 | Al-Cl/Pc | 9 | Black pigment 1 | 1 | PC | 10000 | 93/7 | 30 | 86 | 0.5 |
| Example 11 | Al-Cl/Pc | 8 | Black pigment 2 | 2 | PC | 10000 | 84/16 | 28 | 84 | 0.1 |
| Example 12 | Al-Cl/Pc | 8 | Black pigment 3 | 2 | PC | 10000 | 82/18 | 27 | 71 | 0.5 |
| Example 13 | Al-Cl/Pc | 8 | Black pigment 4 | 2 | PC | 10000 | 76/24 | 28 | 64 | 2.0 |
| Example 14 | Al-Cl/Pc | 8 | Black pigment 1 | 2 | PET | 10000 | 86/14 | 30 | 88 | 0.4 |
| Comparative Example 1 | Cu/Pc | 10 | - | 0 | PC | 10000 | 100/0 | 39 | 56 | 1.5 |
| Comparative Example 2 | - | 0 | Black pigment 1 | 10 | PC | 10000 | 0/100 | 34 | 87 | 0.4 |

From the results in Table 1, it was found that, in any of Examples 1 to 14, the $L^*$ value of the molded article was less than 34, the infrared transmittance at a wavelength of 900 nm was 60% or more, and the $\Delta E^*ab$ value was less than 3, indicating excellent blocking of visible light due to improvement in blackness, excellent transmission of infrared light, and in addition, favorable heat resistance.

On the other hand, in Comparative Example 1, the black pigment was not contained in the composition, the $L^*$ value was 39, and the infrared transmittance at a wavelength of 900 nm was 56%, indicating deteriorated blackness and deteriorated infrared transmittance.

In Comparative Example 2, the phthalocyanine pigment was not contained in the composition, and the $L^*$ value was 34, indicating deteriorated blackness.

Reference Signs List

10: device
11: reflector
12: optical sensor

**Claims**

**1.** A composition comprising:

a phthalocyanine pigment;
a black pigment; and
a resin,
wherein the phthalocyanine pigment includes one or more selected from a compound represented by General Formula (Pc) and a dimer of the compound,

[Chem. 1]

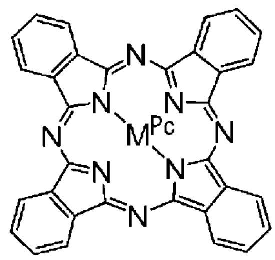

(Pc)

(in the formula,
$M^{Pc}$ represents $X^{Pc}$-Al (trivalent aluminum), $X^{Pc}$-Co (trivalent cobalt), Sn (divalent tin), Fe (divalent iron), or Cu (divalent copper),
$X^{Pc}$ represents a hydroxyl group, a fluorine atom, a chlorine atom, a bromine atom, an iodine atom, $-O-P(=O)R^1R^2$, $-O-C(=O)R^3$, or $-OSO_2R^4$,
$R^1$ and $R^2$ each independently represent a hydrogen atom, a hydroxyl group, an alkyl group which may have a substituent, an aryl group which may have a substituent, an alkoxy group which may have a substituent, or an aryloxy group which may have a substituent,
$R^1$ and $R^2$ may be bonded to each other to form a ring,
$R^3$ represents a hydrogen atom, an alkyl group which may have a substituent, a cycloalkyl group which may have a substituent, an aryl group which may have a substituent, or a heterocyclic group which may have a substituent, and
$R^4$ represents a hydroxyl group, an alkyl group which may have a substituent, an aryl group which may have a substituent, or a heterocyclic group which may have a substituent), and
the black pigment includes one or more compounds selected from compounds represented by Formulae (1) to (6),

[Chem. 2]

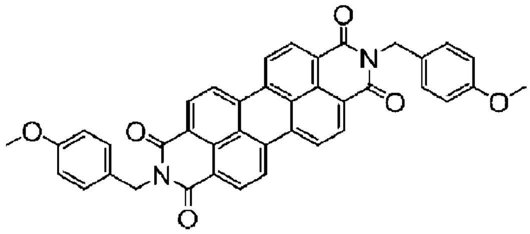

(1)

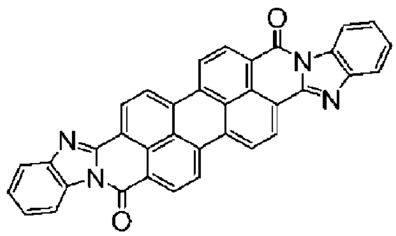

(2)

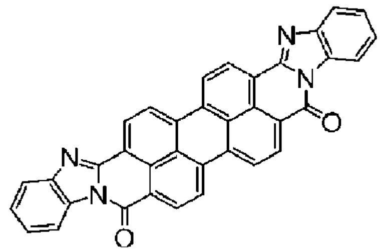

(3)

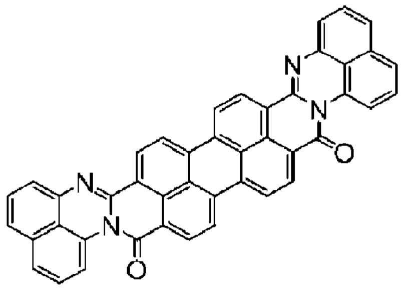

(4)

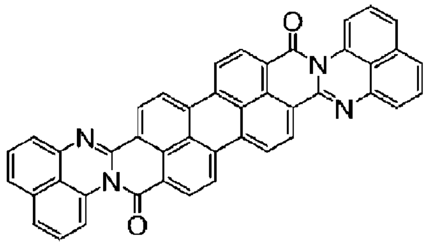

(5)

[Chem. 3]

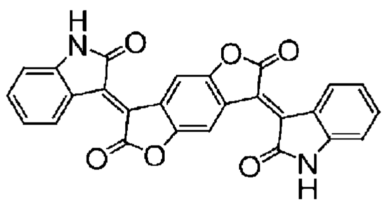

(6)

2. The composition according to claim 1, wherein an average particle diameter of the phthalocyanine pigment is 1 nm or more and 500 nm or less.

3. The composition according to claim 1, wherein a ratio of the number of moles of the phthalocyanine pigment to the number of moles of a total amount of the compounds represented by Formulae (1) to (6), which are contained in the black pigment, is 5/95 to 99/1.

4. The composition according to claim 1, wherein the resin is one or more selected from the group consisting of a polyethylene terephthalate (PET) resin, a polycarbonate (PC) resin, an acrylonitrile styrene (AS) resin, a polymethyl methacrylate (PMMA) resin, an acrylonitrile/butadiene/styrene (ABS) copolymer resin, a polyamide (PA) resin, and an aminoalkyd resin.

5. The composition according to any one of claims 1 to 4, wherein the composition is a composition for a molded article or a coating composition.

**6.** A molded article formed by molding the composition for a molded article according to claim 5.

**7.** The molded article according to claim 6, wherein a blackness ($L^*$) of the molded article is less than 34.

**8.** The molded article according to claim 6, wherein an infrared transmittance of the molded article at a wavelength of 900 nm is 60% or more.

**9.** A device comprising the molded article according to claim 6.

FIG. 1

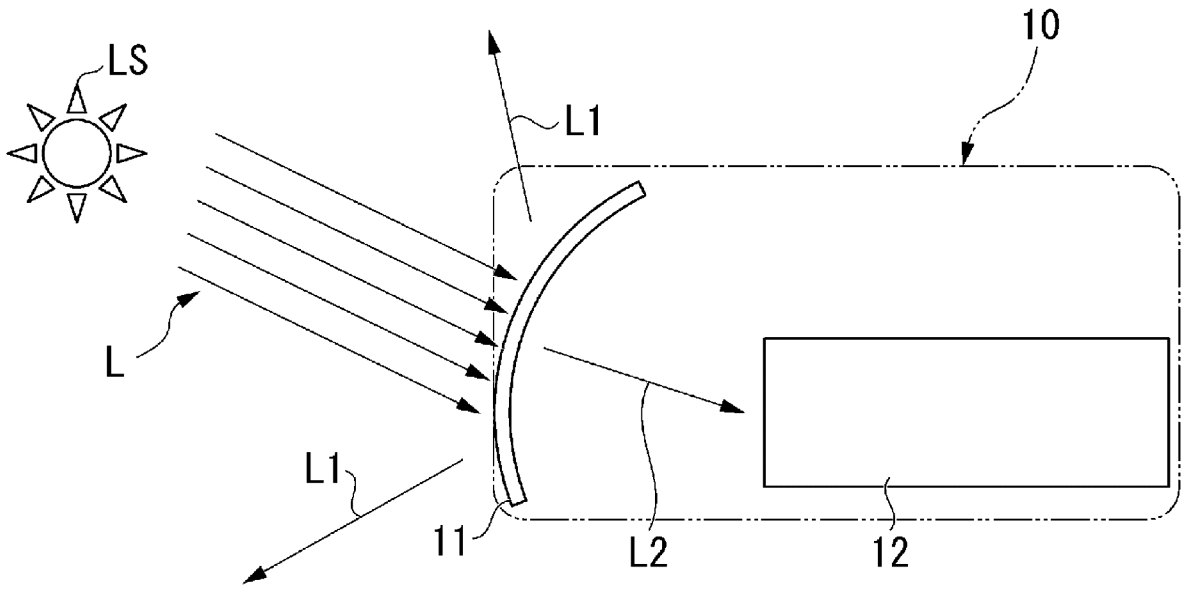

**INTERNATIONAL SEARCH REPORT**

International application No.
**PCT/JP2024/042387**

**A. CLASSIFICATION OF SUBJECT MATTER**

***C09B 67/20***(2006.01)i; ***C09B 5/62***(2006.01)i; ***C09B 23/10***(2006.01)i; ***C09B 47/067***(2006.01)i; ***C09K 3/00***(2006.01)i; ***G02B 5/22***(2006.01)i
FI: C09B67/20 G; C09K3/00 105; C09B47/067; C09B5/62; C09B23/10; G02B5/22

According to International Patent Classification (IPC) or to both national classification and IPC

**B. FIELDS SEARCHED**

Minimum documentation searched (classification system followed by classification symbols)

C09B67/20; C09B5/62; C09B23/10; C09B47/067; C09K3/00; G02B5/22

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/031590 A1 (FUJIFILM CORPORATION) 13 February 2020 (2020-02-13) claims, paragraphs [0035], [0061], [0174]-[0178] | 1-9 |
| Y | same as above | 1-9 |
| Y | JP 2001-133620 A (TOPPAN PRINTING CO., LTD.) 18 May 2001 (2001-05-18) claims | 1-9 |
| X | JP 2018-185512 A (TOKYO OHKA KOGYO CO., LTD.) 22 November 2018 (2018-11-22) claims, paragraphs [0253]-[0257] | 1-3, 5-9 |
| Y | same as above | 1-3, 5-9 |
| X | KR 10-2023-0072183 A (KOREA INSTITUTE OF SCIENCE AND TECHNOLOGY) 24 May 2023 (2023-05-24) claims | 1-5 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 February 2025** | **18 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/042387**

**C. DOCUMENTS CONSIDERED TO BE RELEVANT**

| Category* | Citation of document, with indication, where appropriate, of the relevant passages | Relevant to claim No. |
|---|---|---|
| A | JP 2019-159063 A (GOO CHEMICAL CO., LTD.) 19 September 2019 (2019-09-19) claims | 1-9 |
| A | WO 2015/015962 A1 (DIC CORPORATION) 05 February 2015 (2015-02-05) claims | 1-9 |
| A | JP 2003-161821 A (MITSUBISHI CHEMICAL CORPORATION) 06 June 2003 (2003-06-06) claims | 1-9 |

Form PCT/ISA/210 (second sheet) (July 2022)

**INTERNATIONAL SEARCH REPORT**
**Information on patent family members**

International application No.
**PCT/JP2024/042387**

| Patent document cited in search report | Publication date (day/month/year) | Patent family member(s) | Publication date (day/month/year) |
|---|---|---|---|
| WO 2020/031590 A1 | 13 February 2020 | TW 202007697 A | |
| JP 2001-133620 A | 18 May 2001 | (Family: none) | |
| JP 2018-185512 A | 22 November 2018 | CN 108732865 A<br>KR 10-2018-0119475 A | |
| KR 10-2023-0072183 A | 24 May 2023 | (Family: none) | |
| JP 2019-159063 A | 19 September 2019 | (Family: none) | |
| WO 2015/015962 A1 | 05 February 2015 | TW 201510103 A | |
| JP 2003-161821 A | 06 June 2003 | TW 548434 B | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023204091 A
- WO 2020138050 A